# EUROPÄISCHE PATENTSCHRIFT

(11) **EP 2 003 308 B1**
(45) Veröffentlichungstag und Bekanntmachung des Hinweises auf die Patenterteilung: **14.04.2010**
(21) Anmeldenummer: 07011503.5
(22) Anmeldetag: 12.06.2007
(51) Int. Cl.: F02B 29/08, F02D 9/02, F02D 9/04, F02D 9/08, F02D 9/10, F02D 11/10, F16K 1/22

(54) **Gasführendes Drehklappenventil**
Throttle valve
Vanne à papillon

(43) Veröffentlichungstag der Anmeldung: 17.12.2008
(73) Patentinhaber: Hofmann, Arno, 63571 Gelnhausen (DE)
(72) Erfinder: Hofmann, Arno, 63571 Gelnhausen (DE)
(74) Vertreter: Quermann, Helmut

(56) Entgegenhaltungen:
- EP-A- 1 568 866
- WO-A-01/63627
- DE-A1- 10 218 471

## Beschreibung

Die Erfindung betrifft ein Drehklappenventil zum Führen von Gas, insbesondere zur Verwendung in einer Frischgas- oder Abgasleitung einer Wärmekraftmaschine, mit einem Gehäuse, das einen Gehäuseträger und mindestens eine sich an diesen anschließende gasführende Leitung aufweist, wobei durch das Gehäuse ein gasführender Innenraum gebildet ist, ferner mit einer schwenkbar im Gehäuseträger gelagerten Welle und einer mit der Welle verbundenen Drehklappe zum Öffnen und Schließen eines Kanalquerschnitts des Gehäuseträgers, sowie mit einem elektromagnetischen Antrieb für den gebildeten Drehklappen-Wellen-Verbund, wobei der Antrieb mindestens einen mit den Drehklappen-Wellen-Verbund verbundenen Anker und mindestens einen Elektromagneten aufweist.

Drehklappenventile werden zunehmend in Frischgas- und Abgasleitungen von Wärmekraftmaschinen eingesetzt, um die Gasmassenflüsse zu steuern. Neben dem pneumatischen Antrieb solcher Drehklappenventile ist der elektrische Antrieb für Drosselklappen an Verbrennungsmotoren Stand der Technik (z. B. E-Gas), siehe zum Beispiel DE 102 18 471 A1.

Ein weiteres Einsatzgebiet von gesteuerten Drehklappenventilen ist deren Anwendung als schnellschaltendes Ventil in Einlasskanälen von Zylinderköpfen an Verbrennungsmotoren, um den Einlasskanal während eines Arbeitstaktes zu beliebigen Zeitpunkten öffnen bzw. schließen zu können, womit mittels des Drehklappenventils eine erhebliche Nutzung des thermodynamischen Potenzials variabler Ventiltriebe ermöglicht wird, nämlich:
1. Reduzierung von Pumpverlusten bei Teillast (Miller- bzw. Atkinson-Prozess),
2. Schwingrohraufladung unabhängig von der Motordrehzahl (Impulsaufladung, Schatz),
3. Temperaturabsenkung des Verbrennungsprozesses bei Volllast (Miller- bzw. Atkinson-Prozess),
4. Temperaturanhebung im Saughub (Wärmeladung, Schatz),
5. Abgasrückführung.

Um hohe Schaltfrequenzen von über 150 Hertz zu erreichen, werden die Drehklappenventile häufig als Feder-Masse-Schwinger (Oszillator) ausgebildet, da somit der elektrische Energiebedarf des Antriebs erheblich reduziert werden kann.

Bezogen auf den frischluftseitigen Einsatz eines Drehklappenventils am Zylinderkopf ist ein Drehklappenventil der eingangs genannten Art aus der Zeitschrift MTZ 12/2001, Seiten 998 bis 1009 unter dem Titel "Impulsaufladung und Laststeuerung von Hubkolbenmotoren durch ein Lufttaktventil" bekannt. Dort ist unter 4. ein Prototyp für Motorversuche beschrieben und im Bild 4 der Prototyp dargestellt. Charakteristisch ist hierbei, dass bei diesem schnellschaltenden Drehklappenventil eine räumlich getrennte Anordnung des elektromagnetischen Antriebs von der den Gasfluss steuernde Klappe in der Gasleitung vorgesehen ist. Dieses Bauprinzip ergibt relativ große axiale Bauhöhen des Drehklappenventils.

Dieser genannte Nachteil ist gleichfalls bei weiteren aus dem Stand der Technik bekannt gewordenen Drehklappenventilen zu verzeichnen, die frischluftseitig am Zylinderkopf zum Einsatz gelangen und wie sie in der DE 103 19 168 A1 und dem ATZ/MTZ-Fachbuch, "Ottomotor mit Direkteinspritzung", Sonderdruck Lufttaktventil, ISBN 978-3-8348-0202-6 beschrieben sind.

Die größten thermodynamischen Vorteile lassen sich mit frischgasseitigen Drehklappenventilen durch die Anordnung mindestens eines Drehklappenventils pro Zylinder nahe an den Motoreinlassventilen umsetzen. Um die thermodynamische Güte der weiter oben genannten Ladungswechselvorteile zu maximieren, ist neben einer geringen Leckage des Drehklappenventils in geschlossenem Zustand die Zylinderkopf nahe Einbauposition des Drehklappenventils, d. h. die Reduzierung des Volumens zwischen Motoreinlassventil und Drehklappenventil ausschlaggebend, da die Pumpverluste in diesem sogenannten Schadraum thermodynamische Irreversibilitäten darstellen.

Die beengten Platzverhältnisse am Einlassbereich des Zylinderkopfs ergeben sich einerseits durch den Zylinderabstand der Nachbarzylinder, andererseits durch den Nockenwellenschacht der Einlassnockenwelle und durch eventuell zwischen den Einlassventilen sitzende Einspritzdüsen und Kraftstoffleitungen. Die zum vorstehenden Stand der Technik beschriebenen Drehklappenventile weisen ausnahmslos die genannte räumlich getrennte Anordnung des elektromagnetischen Antriebs von der den Gasfluss steuernden Klappe im Gaskanal auf. Dieses Bauprinzip ergibt die relativ großen axialen Bauhöhen des Drehklappenventils.

Legt man einem notwendigen Fließquerschnitt im Klappenbereich des Drehklappenventils, der zumindest dem Kanalquerschnitt am Zylinderkopf entsprechen muss, zugrunde, sieht man aus den zum Stand der Technik erörterten Ventilkonstruktionen, dass eine zueinander koaxiale Anbindung der Drehklappenventile an Zylinderköpfen von Reihenmotoren hinsichtlich der heute üblichen Zylinderabstände kaum möglich ist.

Die senkrechte, achsparallele Montage von Drehklappenventilen auf Reihenmotoren stößt ebenso auf Probleme, da die thermodynamisch vorteilhafte, zylinderkopfnahe Bauposition eine Kollision entweder zwischen dem elektromagnetischen Antrieb mit dem Nockenwellenschaft des Zylinderkopfes verursacht oder ein am Drehklappenventil nach unten verlagerter Antrieb Überschneidungen mit den oftmals unterhalb des Einlasskanals montierten Einspritzventilen und Kraftstoffgalerien hervorruft.

Auch kann ein nach oben gerichteter elektromagnetischer Antrieb die Motorbauhöhe unzulässig erhöhen, was bei PKW-Frontmotoren hinsichtlich der geforderten Knautschzone zwischen Motor und Motorhaube zu berücksichtigen ist.

Um den beengten Platzverhältnissen nahe des Zylinderkopfes gerecht zu werden, sollte die axiale Baulänge des Drehklappenventils bei den geforderten Fließquerschnitten kleiner als der Zylinderabstand sein, um eine vorteilhafte zueinander koaxiale Anordnung des Drehklappenventils am Zylinderkopf zu ermöglichen.

Aufgabe der vorliegenden Erfindung ist es, bei einem Drehklappenventil der eingangs genannten Art den elektromagnetischen Antrieb so auszubilden, dass dieser die axiale Baulänge des Drehklappenventils nicht bzw. nur geringfügig erhöht.

Gelöst wird die Aufgabe bei einem Drehklappenventil der eingangs genannten Art dadurch, dass der elektromagnetische Antrieb sich zumindest teilweise im gasführenden Innenraum des Gehäuses befindet. Der elektromagnetische Antrieb kann sich durchaus vollständig im gasführenden Innenraum des Gehäuses befinden.

Vorzugsweise befinden sich der Anker und der Elektromagnet teilweise oder ganz im gasführenden Innenraum des Gehäuses.

Durch diese Anordnungen des elektromagnetischen Antriebs erhöht sich die axiale Baulänge des Drehklappenventils nicht bzw. nur geringfügig. Ein solch angetriebenes Drehklappenventil kann demzufolge koaxial zu seinen benachbarten Drehklappenventilen direkt auf die einlassseitige Flanschfläche des Zylinderkopfes der Wärmekraftmaschine montiert werden.

Unter Berücksichtigung der in den Unteransprüchen beschriebenen Weiterbildungen der Erfindung ergibt sich eine erhebliche axiale Bauraumreduzierung des Drehklappenventils, einerseits durch axial sehr schmal ausfallende Elektromagnete, andererseits durch die Eliminierung von Trennwänden, Lagerstellen und Dichtungen zwischen Antrieb und Klappe.

Bevorzugte Weiterbildungen der Erfindung und deren Vorteile ergeben sich aus den Unteransprüchen, der nachfolgenden Beschreibung der Figuren sowie den Figuren selbst. Es wird hierbei bemerkt, dass alle Einzelmerkmale und alle Kombinationen von Einzelmerkmalen erfindungswesentlich sind.

In den Figuren ist die Erfindung einerseits für ein Drehklappenventil ohne Gaskanäle, andererseits für das Drehklappenventil mit Gaskanälen beschrieben, ohne auf dieses Ausführungsbeispiel beschränkt zu sein. Unter diesem Aspekt sind die vielfältigen Erläuterungen dieses Drehklappenventils und dessen Weiterbildungen in der Figurenbeschreibung zu verstehen.

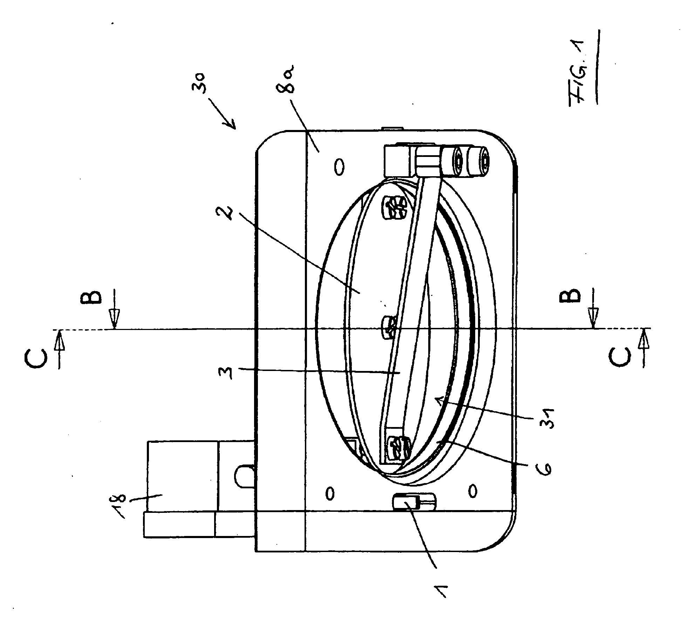

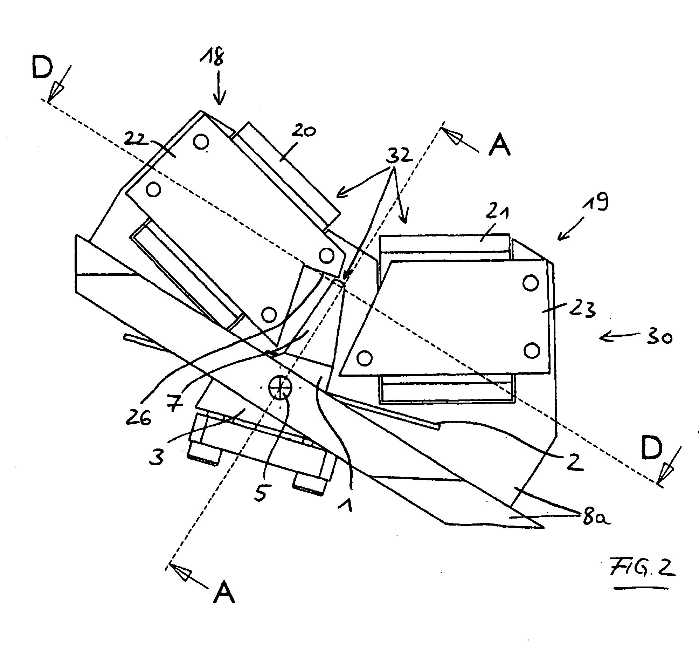

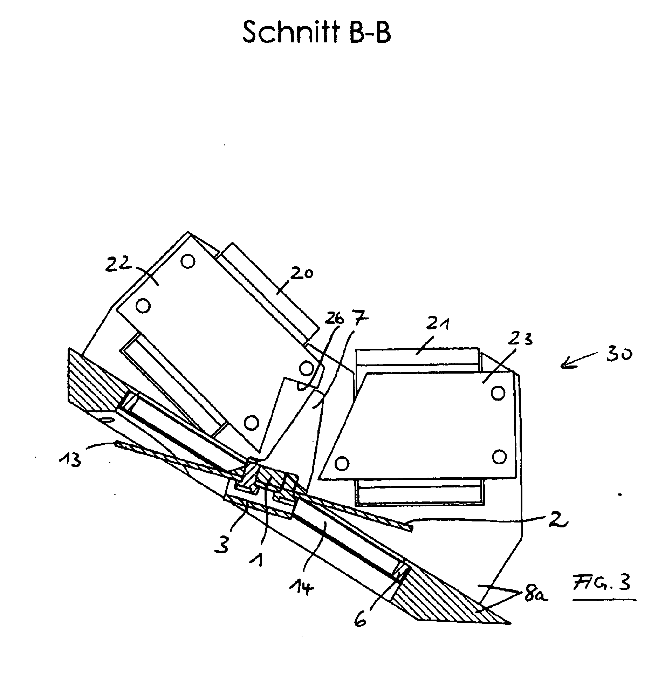

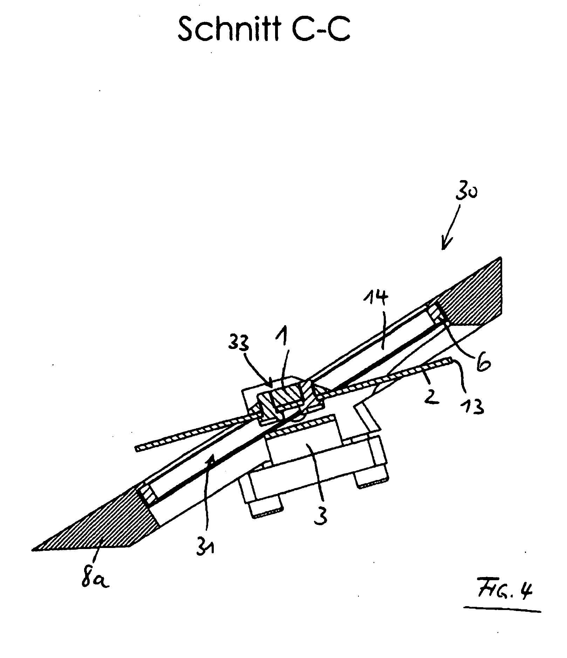

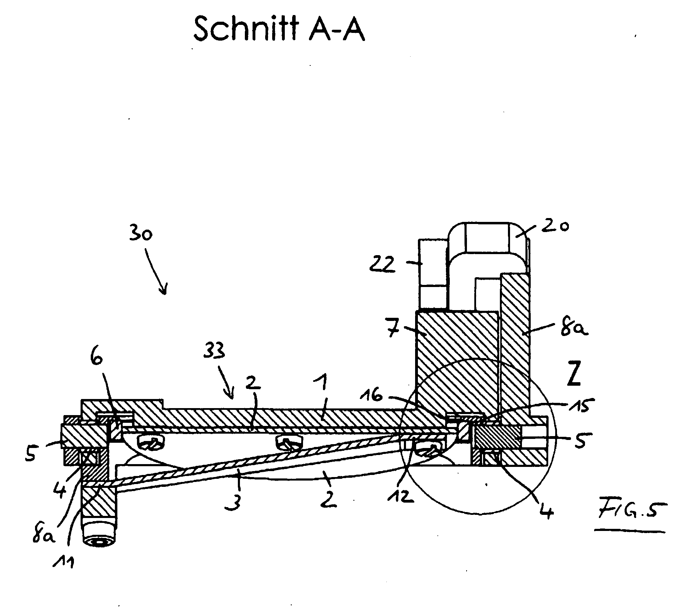

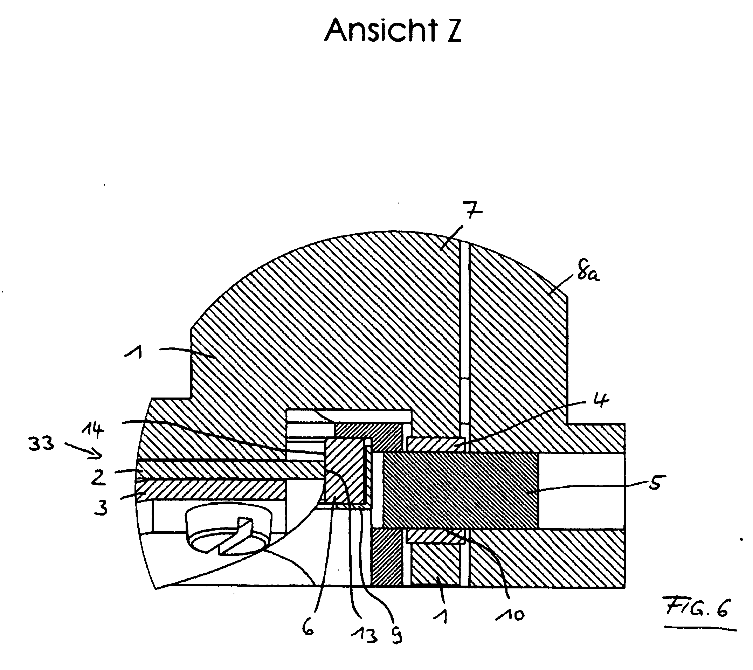

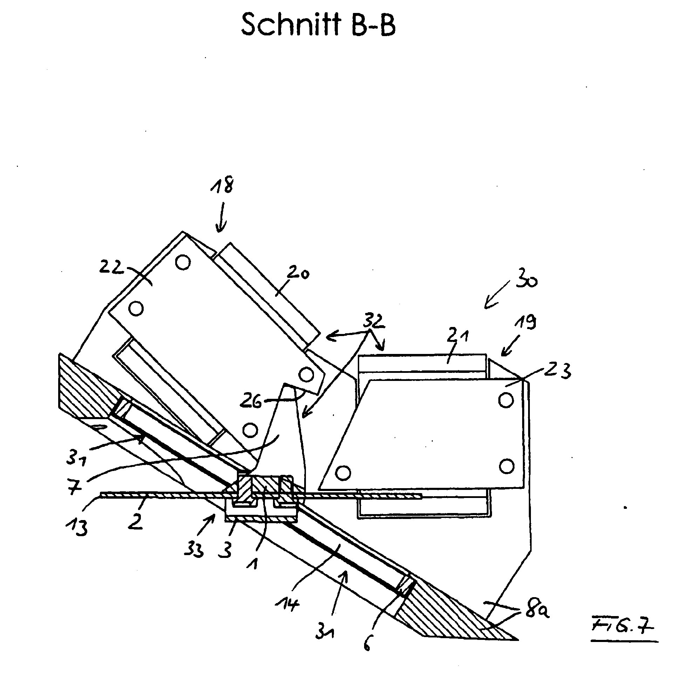

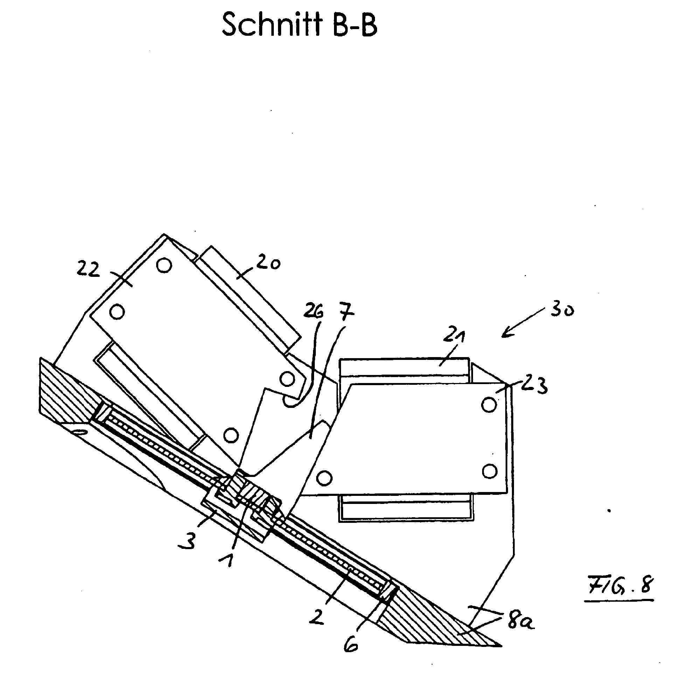

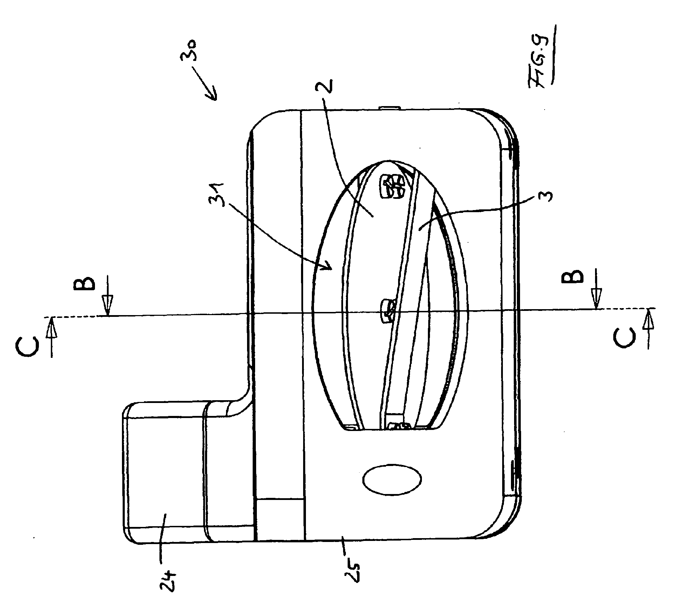

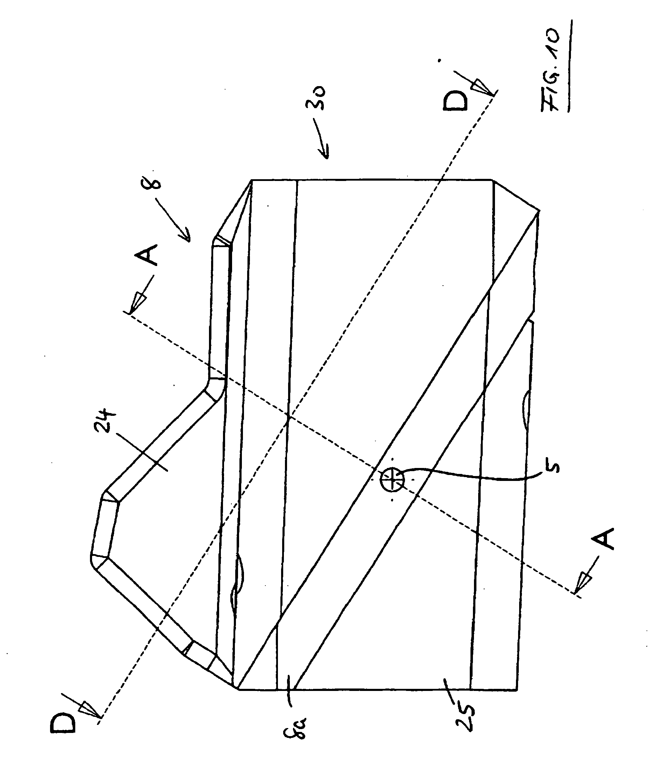

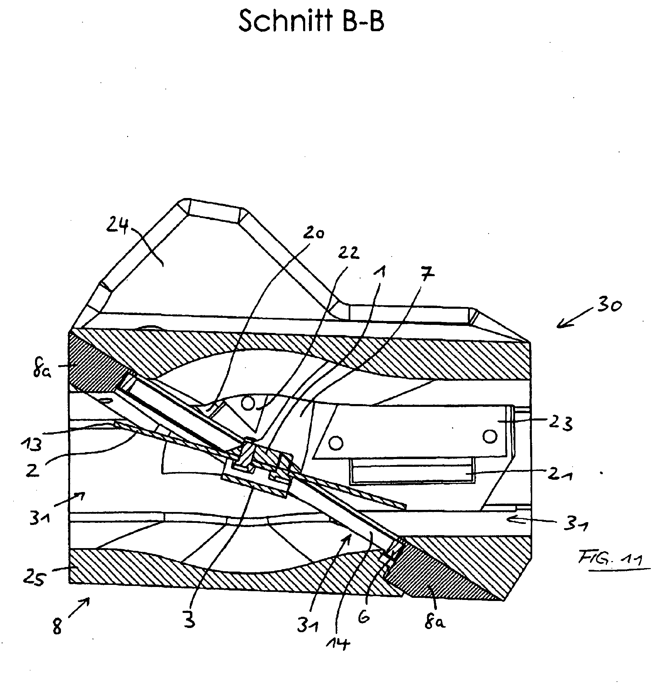

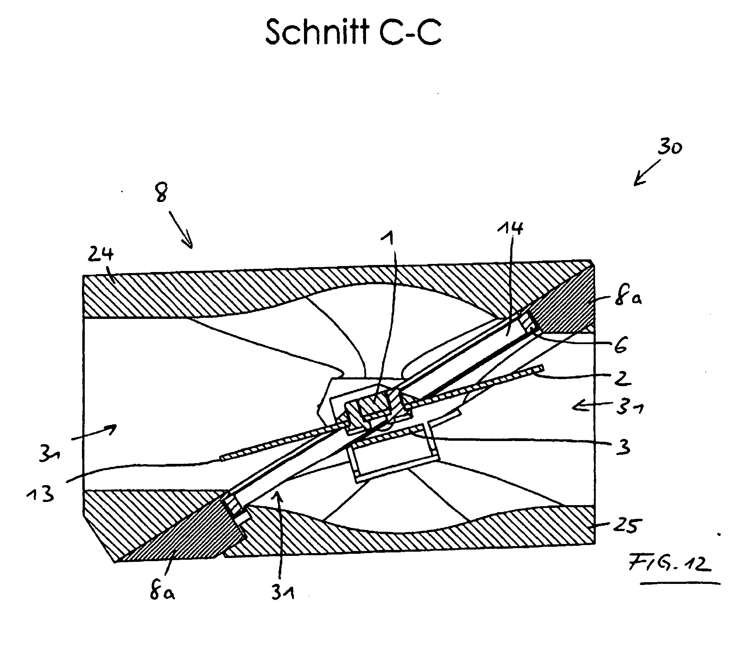

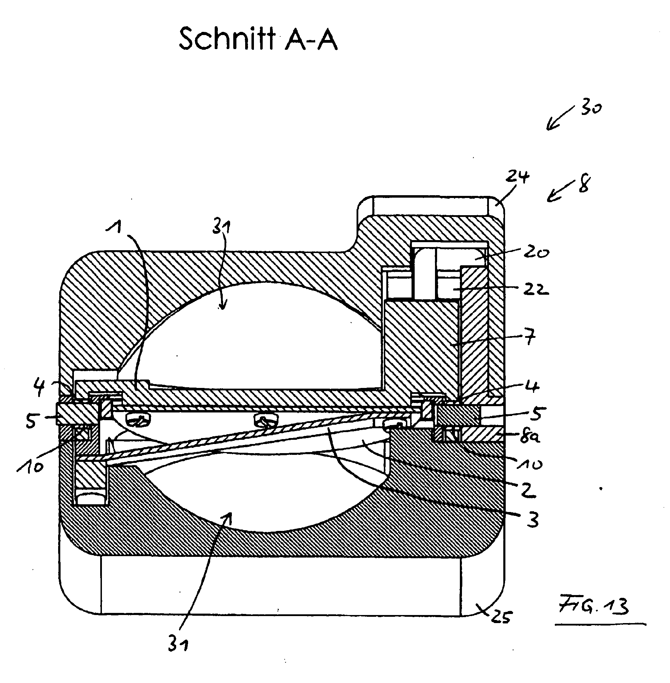

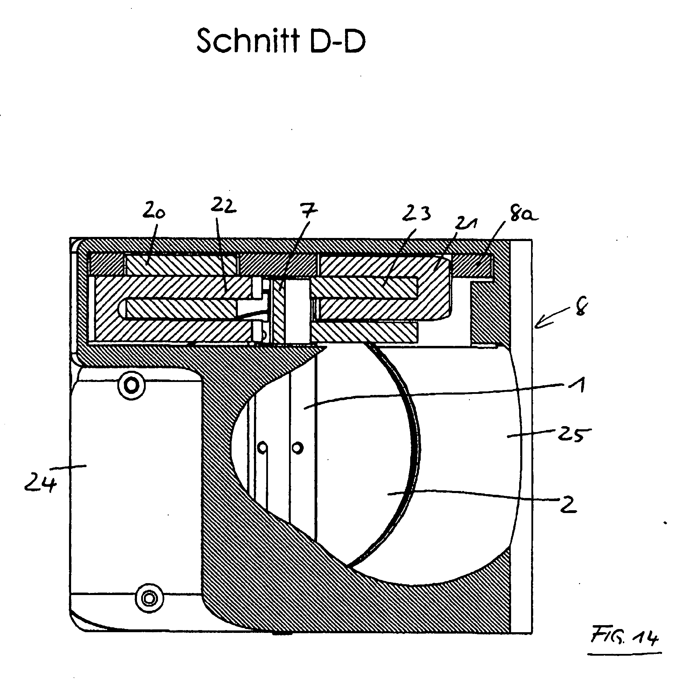

Die Figuren 1 bis 8 stellen das Drehklappenventil ohne gasführende Leitungen/Gaskanäle und die Figuren 9 bis 14 das Drehklappenventil mit gasführenden Leitungen/Gaskanälen dar. Im Detail zeigen:
- Fig. 1: das Ventil von vorne in Strömungsrichtung, bei in Mittenposition befindlicher Klappe und entspannter Feder,
- Fig. 2: eine Ansicht des Ventils von der linken Seite, bei in Mittenposition befindlicher Klappe,
- Fig. 3: einen Schnitt gemäß der Linie B-B in Fig. 1 (Klappe in Mittenposition),
- Fig. 4: einen Schnitt gemäß der Line C-C in Fig. 1 (Klappe in Mittenposition),
- Fig. 5: einen Schnitt gemäß der Line A-A in Fig. 1 (Klappe in Mittenposition),
- Fig. 6: eine Detailansicht Z aus Fig. 5, entlang der Schnittlinie A-A in Fig. 2,
- Fig. 7: einen Schnitt gemäß der Linie B-B in Fig. 1 (veranschaulicht für die Stellung der Klappe in Offenposition),
- Fig. 8: einen Schnitt gemäß der Linie B-B in Fig. 1 (veranschaulicht für die in geschlossener Position befindliche Klappe),
- Fig. 9: das Ventil mit den Gaskanälen, von vorne in Strömungsrichtung gesehen, bei in Mittenposition befindlicher Klappe und entspannter Feder,
- Fig. 10: eine Ansicht von Ventil- und Gaskanälen von der linken Seite,
- Fig. 11: einen Schnitt gemäß der Linie B-B in Fig. 9 (Klappe in Mittenposition),
- Fig. 12: einen Schnitt gemäß der Linie C-C in Fig. 9 (Klappe in Mittenposition),
- Fig. 13: einen Schnitt gemäß der Linie A-A in Fig. 10 (Klappe in Mittenposition),
- Fig. 14: einen Schnitt gemäß der Linie D-D in Fig. 10 (Klappe in Mittenposition).

An einer drehbaren Welle 1 ist eine Drehklappe 2 befestigt, die gemeinsam als Drehklappen-Wellen-Verbund 33 in einem Gehäuseträger 8 über mindestens zwei Lagerstellen 10, die als Gleitlager oder Wälzlager ausgebildet sind, rotieren können. Das Gehäuse 8 weist mindestens den gezeigten, im Ausführungsbeispiel flachgestalteten Gehäuseträger 8a, und mindestens eine mit dem Gehäuseträger 8a verbundene gasführende Leitung 24 oder 25 des angeschlossenen Leitungssystems, insbesondere das angeschlossenen Ansaugsystems auf. Der Innenraum des Gehäuses 8 stellt hierbei einen gasführenden Innenraum 31 dar.

An der drehbaren Welle 1 ist mindestens ein Anker 7 befestigt, der mit zwei Elektromagneten 18 und 19 zusammenwirkt, wobei die Anordnung von Anker und Elektromagneten den elektromagnetischen Antrieb 32 darstellt. Der Anker 7 befindet sich vorteilhafterweise an einem der Wellenenden der Welle 1. Hierdurch lässt sich der elektromagnetische Antrieb 32 strömungsgünstig in die Wand des Gehäuses 8 des Drehklappenventils 30 integrieren. Bei Verwendung mehrerer Anker 7 können diese ausschließlich an einem Wellenende oder auch an beiden Wellenenden der Welle 1 angebracht werden.

Der Anker 7 besteht entweder aus ferromagnetischem Material oder magnetisch polarisiertem Material. Soll der Anker 7 ferromagnetische Eigenschaften aufweisen, so kann er auch mit der Welle 1 einteilig, beispielsweise aus Stahl, hergestellt werden.

Auf den Anker 7 wird durch mindestens einen Elektromagneten, im Ausführungsbeispiel durch die beiden Elektromagnete 18 und 19, unter Bestromung eine Kraft ausgeübt, die an der Welle 1 ein Drehmoment hervorruft.

Die Elektromagnete 18 und 19 bestehen aus einem ferromagnetischen Stator 22 bzw. 23 und mindestens einer Spule 20 bzw. 21.

Die Annäherung des Ankers 7 an den jeweiligen Stator 22 bzw. 23 beim Schlie-βen des Magnetkreises kann unter direkter Anlage des Ankers 7 auf dem jeweiligen Stator 22 bzw. 23 erfolgen oder bei entsprechender Formgebung von Anker und Statoren durch einen verbleibenden (Luft-)Spalt anschlagslos ausgeführt werden.

Die gasführenden Leitungen in Art der Kanalformstücke 24 bzw. 25 übernehmen die gasdichte Kapselung des elektromagnetischen Antriebs 32 nach außen und ebenso die Gasführung zum Gehäuseträger 8a und von diesem weg. Die Kanalformstücke 24 bzw. 25 können Bestandteil des Gasleitungssystems im Bereich des Drehklappenventils 30 sein oder als separate Bauteile, wie im Ausführungsbeispiel dargestellt, ausgeführt werden.

Soll das Drehklappenventil 30 als Feder-Masse-Schwinger betrieben werden, kann eine Feder 3, die insbesondere als Torsions-Biegefeder ausgebildet ist, zwischen Welle 1 und Gehäuse 8, insbesondere Gehäuseträger 8a, als Energiespeicher angeordnet werden.

Die Anwendung des hier beschriebenen kompakten elektromagnetischen Antriebes 32 ist nicht alleine auf die zylinderkopfnahe Einlassseite beschränkt, sondern kann auch in Abgasleitungen und Austauschstrecken von Frisch- und Abgas eingesetzt werden. Eine Begrenzung in der Anwendungstemperatur stellt die Currie-Temperatur der im Magnetkreis verwendeten Materialien dar, wobei ein Aufheizen des elektromagnetischen Antriebs durch den Gasstrom über diese Temperatur hinaus vermieden werden muss, ebenso jedoch der Gasstrom bei geringerer Temperatur den Bauteilen des elektromagnetischen Antriebs durch direkte Kühlung dessen Verlustwärme entziehen kann.

Eine besonders vorteilhafte Ausführung dieses Bauprinzips zeigen die Figuren. Die Welle 1 und der Anker 7 sind einteilig in Stahl ausgeführt. Zwei auf dem Gehäuseträger 8a montierte U-Magnete 18 und 19 mit jeweils einer Spule 20 und 21 ziehen den Anker 7 unter Bestromung an. Beim Schließen des jeweiligen Magnetkreises berührt der Anker 7 die Polflächen des zugehörigen Stators 22 bzw. 23. Die beiden Anlagepositionen des Ankers 7 an den Statoren 22 bzw. 23 begrenzen den Drehwinkelbereich des Drehklappenventils 30. Durch die Anlage des Ankers 7 an den Polflächen der Statoren 22 bzw. 23 werden die größtmöglichen Haltekräfte am Anker 7 erzeugt, da alle Luftspalte im Magnetkreis geschlossen werden und dadurch das Differenzial dW/ds = F am größten wird. Das Bauvolumen der Magnete und deren speicherbare magnetische Feldenergie können somit klein gehalten werden.

Mittels einer asymmetrischen geometrischen Gestaltung einer oder mehrerer Statoren 22 bzw. 23, wie es durch die Bezugsziffer 26 veranschaulicht ist, lässt sich die Kraftwirkung der Elektromagnete 18 und 19 auf den Anker 7 und dessen Mittellage, in der die Feder entspannt ist, mit unterschiedlichen Beträgen auslegen. Eine solche "Kennlinienbeeinflussung" erlaubt es, bei gleichzeitiger Bestromung aller Elektromagnete mit derselben Stromstärke den Anker aus dessen Mittellage in eine Vorzugsrichtung zu ziehen. Die sich daraus ergebenden wesentlichen Vorteile sind die möglich Ansteuerung aller in Reihe oder parallel geschalteten Elektromagnete über nur eine Endstufe im jeweiligen Steuergerät und Reduzierung der Anzahl elektrischer Leitungen.

Die Blattfeder 3 stellt den Energiespeicher für den Feder-Masse-Schwinger dar. Die Blattfeder 3 kann, insbesondere wenn sie eine gewölbte Form und ein rechteckiges Querschnittsprofil aufweist, problemlos mit der Welle 1 und dem Gehäuseträger 8a an den jeweiligen Federenden 12 und 11 verbunden werden. Aufgrund der Federwölbung und den unterschiedlichen radialen Abständen der Federenden von der Drehachse wird die Feder 3 auf Torsion und Biegung beansprucht. Die Integration der Feder 3 in den gasführenden Innenraum 31 des Gehäuses 8, insbesondere des Gehäuseträgers 8a, vermeidet eine Verlängerung der axialen Erstreckung des Drehklappenventils, welches die primäre Forderung des axial kurzbauenden Drehklappenventils 30 unterstützt.

Das wellenseitige Federende 12 der Feder 3 wird zusammen mit der Drehklappe 2 beispielsweise durch Verschraubung oder Vernieten der Welle 1 verbunden. Die Drehklappe 2 ist eben und vorteilhafterweise als einfach herzustellende kreisförmige Scheibe ausgebildet. Schneidet die Flächennormale der Klappe 2, die durch deren Flächenschwerpunkt verläuft, die Drehachse des Drehklappenventils 30, so wird auf die Klappe 2 in deren geschlossenen Zustand auch unter Druckdifferenz an der Klappe 2 kein freies Drehmoment auf diese und entsprechend auf die Welle 1 übertragen.

Um geringe Massenträgheitsmomente zu erreichen, bieten sich als Klappenmaterial Faserverbundwerkstoffe oder leichte Metalle an.

Die Klappe 2 dichtet im geschlossenen Zustand des Drehklappenventils über ihre Außenumfangsfläche 13 zur Innenwand des Gehäuseträgers 8a oder zur Innenumfangsfläche 14 eines im Gehäuseträger 8a eingelassenen Dichtringes 6 ab. Diese Art einer Spaltdichtung erfolgt ohne Anschlag zwischen den Dichtflächen, somit zwischen der Außenumfangsfläche 13 der Klappe 2 und der Innenumfangsfläche 14 des Dichtrings 6, wodurch eine kinematische Überbestimmung des Feder-Masse-Schwingers aufgrund eines doppelten Anschlages von Anker 7 und Klappe 2 in eine der Endlagen der Drehbewegung vermieden wird.

Der Dichtring 6 ist vorteilhaft in einer offenen Nut 15 des Gehäuseträgers 8a durch einen Klemmring 9 gegen axiales Verschieben gesichert. Nach erfolgter Montage kann der Dichtring 6 einerseits im Gehäuseträger 8a in der Nut 15 radial frei beweglich bleiben, da die Klappe 2 bei jedem Schließvorgang den Dichtring 6 erneut zu zentrieren vermag. Der Dichtring 6 dichtet dabei mit seinen Seitenflächen 16 zum Gehäuseträger 8a beispielsweise durch Anlagedichtung ab.

Die Lagerstellen 10 zwischen Welle 1 und Gehäuseträger 8a können aus Wälz-oder auch aus Gleitlagern bestehen. Sehr kostengünstig kann die Lagerung durch im Gehäuseträger 8a verpresste Lagerzapfen 5 und in die Welle 1 eingepresste Gleitlager 4 ausgeführt werden.

Sowohl die gasdichte als auch die akustische Kapselung des elektromagnetischen Antriebs 32 erfolgt durch die zwei Kanalformstücke 24 und 25, die die Gasführung zum Gehäuse 8 und von diesem weg übernehmen, zu diesem ebenfalls gasdicht abschließen und den kompletten elektromagnetischen Antrieb 32 umhüllen. Die Kanalformstücke 24 und 25 lassen sich vorteilhafterweise als Kunststoffspritzgussteil mit den entsprechend guten akustischen Dämpfungseigenschaften solcher Materialien herstellen.

## Patentansprüche

1. Drehklappenventil (30) zum Führen von Gas, insbesondere zur Verwendung in einer Frischgas- oder Abgasleitung einer Wärmekraftmaschirie, mit einem Gehäuse (8), das einen Gehäuseträger (8a) und mindestens eine sich an diesen anschließende gasführende Leitung (24, 25) aufweist, wobei durch das Gehäuse (8) ein gasführender Innenraum (31) gebildet ist, ferner mit einer schwenkbar im Gehäuseträger (8a) gelagerten Welle (1) und einer mit der Welle (1) verbundenen Drehklappe (2) zum Öffnen und Schießen eines vom Gas durchströmten Kanalquerschnitts des Gehäuseträgers (8a), sowie mit einem elektromagnetischen Antrieb (32) für den gebildeten Drehklappen-Wellen-Verbund (33), wobei der Antrieb (32) mindestens einen mit dem Drehklappen-Wellen-Verbund (33) verbundenen Anker (7) und mindestens einen Elektromagneten (18 bzw. 19) aufweist, **dadurch gekennzeichnet, dass** der elektromagnetische Antrieb (32) sich zumindest teilweise im gasführenden Innenraum (31) des Gehäuses (8) befindet.

2. Drehklappenventil nach Anspruch 1, **dadurch gekennzeichnet, dass** der elektromagnetische Antrieb (32) sich vollständig im gasführenden Innenraum (31) des Gehäuses (8) befindet.

3. Drehklappenventil nach Anspruch 1 oder 2, **dadurch gekennzeichnet, dass** der Anker (7) und der Elektromagnet (18 bzw. 19) sich teilweise oder ganz im gasführenden Innenraum (31) des Gehäuses (8) befinden.

4. Drehklappenventil nach einem der Ansprüche 1 bis 3, **dadurch gekennzeichnet, dass** mehrere Elektromagnete (18, 19), insbesondere zwei Elektromagnete (18, 19), vorgesehen sind, und der Anker (7) die Statoren (22, 23) der Elektromagnete (18, 19) in den Endlagen der Wellenpositionen berührt oder zu diesen einen engen berührungsfreien Spalt bildet.

5. Drehklappenventil nach einem der Ansprüche 1 bis 4, **dadurch gekennzeichnet, dass** der Anker (7) aus ferromagnetischem und/oder magnetisch polarisiertem Material besteht.

6. Drehklappenventil nach einem der Ansprüche 1 bis 5, **dadurch gekennzeichnet, dass** der Anker (7) mit der Welle (1) verbunden ist, insbesondere einteilig ausgeführt ist.

7. Drehklappenventil nach einem der Ansprüche 4 bis 6, **dadurch gekennzeichnet, dass** die Statoren (22, 23) U-förmig geformt sind und jeder Stator (22 bzw. 23) mindestens eine Spule (20 bzw. 21) trägt.

8. Drehklappenventil nach einem der Ansprüche 1 bis 7, **dadurch gekennzeichnet, dass** mindestens ein elektromagnetischer Antrieb (32) sich an einem Wellenende der Welle (1) befindet.

9. Drehklappenventil nach einem der Ansprüche 1 bis 8, **dadurch gekennzeichnet, dass** alle Elektromagnete (18, 19) über eine Endstufe eines Steuergerätes seriell oder parallel bestromt werden.

10. Drehklappenventil nach einem der Ansprüche 1 bis 9, **dadurch gekennzeichnet, dass** der elektromagnetische Antrieb (32) strömungsgünstig in die kanalseitige Gehäusewand des Ventils (30) eingebettet ist.

11. Drehklappenventil nach einem der Ansprüche 1 bis 10, **dadurch gekennzeichnet, dass** der Drehklappen-Wellen-Verbund (33) mit einer am Gehäuseträger (8a) abgestützten Feder (3) verbunden ist und bei Auslenkung der Welle (1) ein Rückstellmoment der Feder (3) auf den Drehklappen-Wellen-Verbund (33) wirkt.

12. Drehklappenventil nach Anspruch 11, **dadurch gekennzeichnet, dass** die Feder (3) sich ganz oder zumindest teilweise im gasführenden Innenraum (31) des Gehäuses (8), insbesondere des Gehäuseträgers (8a) befindet.

13. Drehklappenventil nach Anspruch 11 oder 12, **dadurch gekennzeichnet, dass** die Feder (3) als Torsions- oder Torsions-Biegefeder ausgelegt ist.

14. Drehklappenventil nach einem der Ansprüche 11 bis 13, **dadurch gekennzeichnet, dass** die Feder (3) als Blattfeder ausgebildet ist.

15. Drehklappenventil nach einem der Ansprüche 1 bis 14, **dadurch gekennzeichnet, dass** die Klappe (2) in geschlossenem Zustand des Ventils (30) mit ihrer Außenumfangsfläche (13) und der Kanalinnenwand des Gehäuseträgers (8a) einen engen Drosselspalt zur Leckagereduzierung ausbildet.

16. Drehklappenventil nach einem der Ansprüche 1 bis 15, **dadurch gekennzeichnet, dass** die Klappe (2) in geschlossenem Zustand des Ventils (30) mit ihrer Außenumfangsfläche (13) und der Innenfläche (14) eines Dichtrings (6) einen engen Drosselspalt bildet, wobei der Dichtring (6) fest oder beweglich im Gehäuseträger (8a) eingelassen ist und zu diesem ebenfalls abdichtet.

17. Drehklappenventil nach einem der Ansprühe 1 bis 16, **dadurch gekennzeichnet, dass** die Klappe (2) an der Welle (1) in einer solchen Position befestigt wird, dass bei Druckdifferenz am geschlossenen Ventil (30) keine Kraftmomente von der Klappe (2) in die Welle (1) eingeleitet werden.

18. Drehklappenventil nach einem der Ansprüche 1 bis 17, **dadurch gekennzeichnet, dass** eine gasdichte Kapselung des elektromagnetischen Antriebs (32) nach außen durch mindestens eine gasführende Leitung, vorzugsweise mindestens ein Kanalformstück (24 bzw. 25), insbesondere durch mehrere Kanalformstücke (24, 25) geschieht, die mit dem Gehäuseträger (8a) gasdicht verbunden sind.

19. Drehklappenventil nach Anspruch 18, **dadurch gekennzeichnet, dass** die Kanalformstücke (24, 25) separate Bauteile oder Teilstücke von Anschlussteilen des Leitungssystems, in dem das Ventil (30) integriert ist, darstellen.

20. Drehklappenventil nach einem der Ansprüche 1 bis 19, **dadurch gekennzeichnet, dass** der jeweilige Elektromagnet (18, 19) unmittelbar mit dem Gehäuse (8), insbesondere dem Gehäuseträger (8a) verbunden ist.

21. Drehklappenventil nach einem der Ansprüche 4 bis 20, **dadurch gekennzeichnet, dass** Anker (7) und Statoren (22, 23) durch Beschichtung gegen Korrosion geschützt sind.

## Claims

1. Butterfly valve (30) for the routing of gas, in particular for use in a fresh-gas or exhaust-gas line of a thermal engine, with a housing (8) which has a housing carrier (8a) and at least one gas-routing line (24, 25) adjoining the latter, a gas-routing inner space (31) being formed by the housing (8), furthermore with a shaft (1) mounted pivotably in the housing carrier (8a) and with a rotary flap (2), connected to the shaft (1), for opening and closing a duct cross section of the housing carrier (8a), through which duct cross section the gas flows, and also with an electromagnetic drive (32) for the composite rotary-flap/shaft structure (33) formed, the drive (32) having at least one armature (7), connected to the composite rotary-flap/shaft structure (33), and at least one electromagnet (18 or 19), **characterized in that** the electromagnetic drive (32) is located at least partially in the gas-routing inner space (31) of the housing (8).

2. Butterfly valve according to Claim 1, **characterized in that** the electromagnetic drive (32) is located completely in the gas-routing inner space (31) of the housing (8).

3. Butterfly valve according to Claim 1 or 2, **characterized in that** the armature (7) and the electromagnet (18 or 19) are located partially or completely in the gas-routing inner space (31) of the housing (8).

4. Butterfly valve according to one of claims 1 to 3, **characterized in that** a plurality of electromagnets (18, 19), in particular the electromagnets (18, 19), are provided, and the armature (7) touches the stators (22, 23) of the electromagnets (13, 19) in the end positions of the shaft settings or forms a narrow touch-free gap with respect to the said stators.

5. Butterfly valve according to one of Claims 1 to 4, **characterized in that** the armature (7) consists of ferromagnetic and/or magnetically po-arized material.

6. Butterfly valve according to one of Claims 1 to 5, **characterized in that** the armature (7) is connected to the shaft (1), in particular is formed in one piece with the latter.

7. Butterfly valve according to one of Claims 4 to 6, **characterized in that** the stators (22, 23) are of U-shaped form, and each stator (22 or 23) carries at least one coil (20 or 21).

8. Butterfly valve according to one of Claims 1 to 7, **characterized in that** at least one electromagnetic drive (32) is located at a shaft end of the shaft (1).

9. butterfly valve according to one of Claims 1 to 8, **characterized in that** all the electromagnets (18, 19) receive current in series or in parallel via an output stage of a control apparatus.

10. Butterfly valve according to one of Claims 1 to 9, **characterized in that** the electromagnetic drive (32) is embedded in streamlined fashion into the duct-side housing wall of the valve (30).

11. Butterfly valve according to one of Claims 1 to 10, **characterized in that** the composite rotary-flap/shaft structure (33) is connected to a spring (3) supported on the housing carrier (8a), and when the shaft (1) is deflected a restoring foment of the spring (3) acts upon the composite rotary-flap/shaft structure (33).

12. butterfly valve according to Claim 11, **characterized in that** the spring (3) is located completely or at least partially in the gas-routing inner space (31) of the housing (8), in particular of the housing carrier (8a).

13. Butterfly valve according to claim 11 or 12, **characterized in that** the spring (3) is designed as a torsion or spiral torsion spring.

14. Butterfly valve according to one of claims 11 to 13, **characterized in that** the spring (3) is designed as a leaf spring.

15. Butterfly valve according to one of Claims 1 to 14, **characterized in that**, when the valve (30) is in the closed state, the flap (2) forms, with its outer circumferential face (13) and with the duct inner wall of the housing carrier (8a), a narrow throttle gap for leakage reduction.

16. Butterfly valve according to one of claims 1 to 15, **characterized in that**, when the valve (30) is in the closed state, the flap (2) forms, with its outer circumferential face (13) and with the inner face (14) of a sealing ring (6), a narrow throttle gap, the sealing ring (6) being embedded fixedly or movably in the housing carrier (8a) and likewise sealing off with respect to the latter.

17. Butterfly valve according to one of Claims 1 to 16, **characterized in that** the flap (2) is fastened to the shaft (7) in a position such that, in the event of a pressure difference at the closed valve (30), no moments of force are introduce from the flap (2) into the shaft (1).

18. Butterfly valve according to one of Claims 1 to 17, **characterized in that** an outward gas-tight encapsulation of the electromagnetic drive (32) takes place by means of at least one gas-routing line, preferably at least one duct moulding (24 or 25), in particular by means of a plurality of duct mouldings (24, 25) which are connected, gas-tight, to the housing carrier (8a).

19. Butterfly valve according to Claim 18, **characterized in that** the duct mouldings (24, 25) constitute separate components or portions of connecting parts of the line system in which the valve (30) is integrated.

20. Butterfly valve according to one of Claims 1 to 19, **characterized in that** the respective electromagnet (18, 19) is connected directly to the housing (8), in particular to the housing carrier (8a).

21. Butterfly valve according to one of Claims 4 to 20, **characterized in that** the armature (7) and stators (22, 23) are protected against corrosion by coating.

## Revendications

1. Vanne à papillon (30) pour guider du gaz, en particulier pour l'utilisation dans une conduite de gaz frais ou de gaz d'échappement d'une machine thermodynamique, comprenant un boîtier (8), qui présente un support de boîtier (8a) et au moins une conduite (24, 25) guidant du gaz se raccordant à celui-ci, un espace interne (31) guidant du gaz étant formé à travers le boîtier (8), et comprenant en outre un arbre (1) monté de manière pivotante dans le support de boîtier (8a), et un papillon (2) connecté à l'arbre (1) pour ouvrir et fermer une section 0transversale de canal du support de boîtier (8a) parcourue par un gaz, ainsi qu'un entraînement électromagnétique (32) pour l'assemblage formé du papillon et de l'arbre (33), l'entraînement (32) présentant au moins un induit (7) connecté à l'assemblage du papillon et de l'arbre (33) et au moins un électroaimant (18 ou 19), **caractérisée en ce que** l'entraînement électromagnétique (32) se trouve au moins en partie dans l'espace interne guidant du gaz (31) du boîtier (8).

2. Vanne à papillon selon la revendication 1, **caractérisée en ce que** l'entraînement électromagnétique (32) se trouve complètement dans l'espace interne guidant du gaz (31) du boîtier (8).

3. Vanne à papillon selon la revendication 1 ou 2, **caractérisée en ce que** l'induit (7) et l'électroaimant (18 ou 19) se trouvent en partie ou complètement dans l'espace interne guidant du gaz (31) du boîtier (8).

4. Vanne à papillon selon l'une quelconque des revendications 1 à 3, **caractérisée en ce que** plusieurs électroaimants (18, 19), en particulier deux électroaimants (18, 19) sont prévus, et l'induit (7) vient en contact avec les stators (22, 23) des électroaimants (18, 19) dans les positions d'extrémité des positions de l'arbre ou forme avec ceux-ci une fente étroite sans contact.

5. Vanne à papillon selon l'une quelconque des revendications 1 à 4, **caractérisée en ce que** l'induit (7) se compose de matériau ferromagnétique et/ou de matériau à polarisation magnétique.

6. Vanne à papillon selon l'une quelconque des revendications 1 à 5, **caractérisée en ce que** l'induit (7) est connecté à l'arbre (1), en particulier est réalisé d'une seule pièce.

7. Vanne à papillon selon l'une quelconque des revendications 4 à 6, **caractérisée en ce que** les stators (22, 23) sont formés en forme de U et chaque stator (22 ou 23) porte au moins une bobine (20 ou 21).

8. Vanne à papillon selon l'une quelconque des revendications 1 à 7, **caractérisée en ce qu'**au moins un entraînement électromagnétique (32) se trouve sur une extrémité d'arbre de l'arbre (1).

9. Vanne à papillon selon l'une quelconque des revendications 1 à 8, **caractérisée en ce que** tous les électroaimants (18, 19) sont parcourus par un courant en série ou en parallèle par le biais d'un étage d'extrémité d'un appareil de commande.

10. Vanne à papillon selon l'une quelconque des revendications 1 à 9, **caractérisée en ce que** l'entraînement électromagnétique (32) est noyé de manière favorable à l'écoulement dans la paroi du boîtier de la vanne (30) du côté du canal.

11. Vanne à papillon selon l'une quelconque des revendications 1 à 10, **caractérisée en ce que** l'assemblage du papillon et de l'arbre (33) est connecté à un ressort (3) supporté sur le support de boîtier (8a) et lors de la déviation de l'arbre (1), un couple de rappel du ressort (3) agit sur l'assemblage du papillon et de l'arbre (33).

12. Vanne à papillon selon la revendication 11, **caractérisée en ce que** le ressort (3) se trouve complètement ou au moins en partie dans l'espace interne guidant du gaz (31) du boîtier (8), en particulier du support de boîtier (8a).

13. Vanne à papillon selon la revendication 11 ou 12, **caractérisée en ce que** le ressort (3) est réalisé sous forme de ressort de torsion ou de torsion-flexion.

14. Vanne à papillon selon l'une quelconque des revendications 11 à 13, **caractérisée en ce que** le ressort (3) est réalisé sous forme de ressort à lame.

15. Vanne à papillon selon l'une quelconque des revendications 1 à 14, **caractérisée en ce que** le pavillon (2), dans l'état fermé de la vanne (30), constitue avec sa surface périphérique extérieure (13) et avec la paroi interne du canal du support de boîtier (8a) une fente d'étranglement étroite pour réduire les fuites.

16. Vanne à papillon selon l'une quelconque des revendications 1 à 15, **caractérisée en ce que** le papillon (2) dans l'état fermé de la vanne (30) forme avec sa surface périphérique extérieure (13) et avec la surface intérieure (14) d'une bague d'étanchéité (6) une fente d'étranglement étroite, la bague d'étanchéité (6) étant incorporée fixement ou de manière mobile dans le support de boîtier (8a) et réalisant également l'étanchéité par rapport à celui-ci.

17. Vanne à papillon selon l'une quelconque des revendications 1 à 16, **caractérisée en ce que** le papillon (2) est fixé sur l'arbre (1) dans une position telle que pour une différence de pression au niveau de la vanne fermée (30), aucun couple ne soit introduit depuis le papillon (2) dans l'arbre (1).

18. Vanne à papillon selon l'une quelconque des revendications 1 à 17, **caractérisée en ce qu'**un encapsulage étanche aux gaz de l'entraînement électromagnétique (32) est réalisé vers l'extérieur par au moins une conduite guidant du gaz, de préférence par au moins une pièce moulée de canal (24 ou 25), notamment par plusieurs pièces moulées de canal (24, 25), qui sont connectées de manière étanche aux gaz au support de boîtier (8a).

19. Vanne à papillon selon la revendication 18, **caractérisée en ce que** les pièces moulées de canal (24, 25) constituent des composants séparés ou des pièces partielles de pièces de raccordement du système de conduite, dans lequel la vanne (30) est intégrée.

20. Vanne à papillon selon l'une quelconque des revendications 1 à 19, **caractérisée en ce que** l'électroaimant respectif (18, 19) est connecté directement au boîtier (8), en particulier au support de boîtier (8a).

21. Vanne à papillon selon l'une quelconque des revendications 4 à 20, **caractérisée en ce que** l'induit (7) et les stators (22, 23) sont protégés contre la corrosion par un revêtement.
